# EUROPEAN PATENT APPLICATION

(11) **EP 4 636 927 A1**
(43) Date of publication of application: **22.10.2025**
(21) Application number: 24382425.7
(22) Date of filing: 19.04.2024
(51) Int. Cl.: H01M 50/383, H01M 10/48, H01M 10/613, H01M 10/625, A62C 3/07, A62C 99/00

(54) **METHOD AND SYSTEM FOR REDUCING THERMAL RUNAWAYS IN A BATTERY PACK**

(71) Applicant: AIRBUS OPERATIONS, S.L.U., 28906 Getafe (Madrid) (ES)
(72) Inventor: HERNANDEZ HIDALGO, Carlos, 28906 GETAFE (Madrid) (ES)
(74) Representative: Herrero & Asociados, S.L.

(57) **Abstract**

The method for reducing thermal runaways in a battery pack (1) comprises the following steps: detecting a temperature inside the battery pack (1); if the temperature detected is higher than a predetermined temperature, injecting air with nitrogen and oxygen, the oxygen being less than the 10 % in volume, the inside the battery pack (1) and removing oxygen from the inside of the battery pack (1).

The system comprises a temperature sensor (2); an inerting system (4) for injecting air with nitrogen and oxygen, the oxygen being less than the 10 % in volume, inside the battery pack (1) if a temperature detected by the temperature sensor (2) is higher than a predetermined temperature; and an exit duct (7), through which oxygen is removed from the battery pack (1) if the temperature detected by the temperature sensor (2) is higher than a predetermined temperature.

## Description

The present invention relates to a method and a system for reducing thermal runaways in a battery pack, in particular for aircrafts, for reducing the runaway energy and propagation, reducing the amount of oxygen inside the battery pack.

### Background of the invention

Battery packs are widely used in various industries ranging from consumer electronics to automotive applications, providing portable power sources for a multitude of devices. However, one significant challenge associated with battery packs is the risk of thermal runaway, which can lead to consequences including fires and explosions.

Thermal runaway occurs when the internal temperature of a battery cell or pack increases uncontrollably, typically due to factors such as overcharging, overtemperature , internal short circuits, or manufacturing defects. As the temperature rises, chemical reactions within the battery accelerate, releasing additional heat and causing a self-reinforcing cycle of thermal runaway. This phenomenon is particularly prevalent in lithium-ion batteries, which are commonly used in modern battery packs due to their high energy density and rechargeable properties.

The consequences of thermal runaway can be severe, posing significant safety risks to both users and the surrounding environment. Traditional methods of mitigating thermal runaway, such as incorporating thermal protection devices or improving battery management systems, have limitations in effectively reducing or suppressing thermal runaway events.

### Description of the invention

Therefore, an objective of the present invention is to provide a method and a system for reducing thermal runaways in a battery pack, in particular in a battery pack of an aircraft, that adds a minimum number of components, reducing the damages that a thermal runaway can cause, by reducing the amount of oxygen inside a battery pack.

The method and a system for reducing thermal runaways in a battery pack of the invention solve the above-mentioned disadvantages and has other advantages which will be described below.

The method and system for reducing thermal runaways in a battery pack according to the present invention is described in the independent claims, and the dependent claims include additional features that are optional.

In particular, the method for reducing thermal runaways in a battery pack comprises the following steps:
- detecting a temperature inside the battery pack;
- if the temperature detected is higher than a predetermined temperature, injecting air with nitrogen and oxygen, the oxygen being less than the 10 % in volume, inside the battery pack and removing oxygen from the inside of the battery pack.

Thanks to this feature, the use of air with nitrogen creates hypoxia within the battery pack when a potential thermal runaway scenario is detected, and reducing the oxygen in the battery pack reduces the amount of heat and flame time of the thermal runaway.

According to a preferred embodiment, the injection of air with nitrogen and the removal of oxygen is carried out until the temperature inside the battery pack is reduced bellow the initial thermal runaway temperature.

Furthermore, a voltage drop inside the battery pack can also indicate the start of a thermal runaway and the injection of nitrogen and the removal of the oxygen is also carried out.

If wished, the method according to the present invention can also comprise the step of cooling the air with nitrogen before its injection inside the battery pack.

According to a second aspect, the system for reducing thermal runaways in a battery pack comprises:
- a temperature sensor placed inside the battery pack;
- an inerting system in communication with the battery pack through an entry duct provided with an entry valve, for injecting air with nitrogen and oxygen, the oxygen being less than the 10 % in volume, inside the battery pack if a temperature detected by the temperature sensor is higher than a predetermined temperature; and
- an exit duct in the battery pack provided with an exit valve, through which oxygen is removed from the battery pack if the temperature detected by the temperature sensor is higher than a predetermined temperature.

In particular, the inerting system is the inerting system of an aircraft, that is used for inerting the fuel tanks.

Furthermore, the system can also comprise a voltage sensor placed inside the battery pack, and the system can also comprise a cooling unit placed between the inerting system and the battery pack, for cooling the nitrogen before its injection inside the battery pack.

### Brief description of the drawings

For a better understanding of what has been explained above, some drawings are included in which, schematically and only by way of a non-limiting example, a practical case of embodiment is represented.

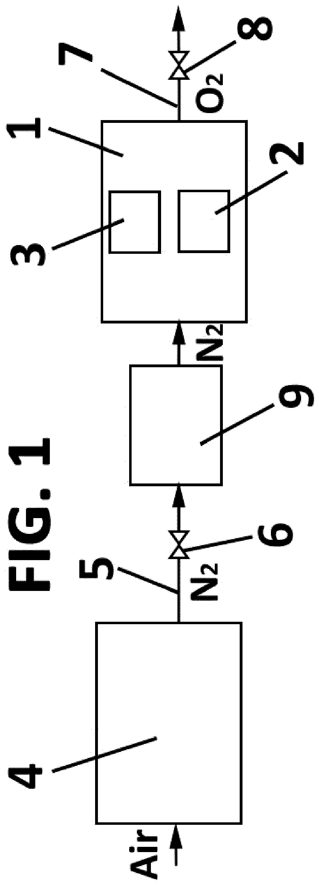

Figure 1 is a block diagram of the system for reducing thermal runaways in a battery pack according to the present invention.

### Description of a preferred embodiment

Figure 1 shows in a block diagram of the system for reducing thermal runaways in a battery pack, preferably a battery pack of an aircraft, according to the present invention, showing the components of this system.

The system comprises a battery pack 1 which houses a temperature sensor 2, and optionally a voltage sensor 3, for detecting respectively the temperature and the voltage inside the battery pack 1.

The system also comprises an inerting system 4 of an aircraft, that delivers or injects air with nitrogen and oxygen, the oxygen being less than the 10 % in volume, to the battery pack 1 when necessary, through an entry duct 5 provided with an entry valve 6, and air can be introduced in said inerting system 4.

Preferably, the inerting system 4 is the inerting system of an aircraft, that is used for inerting the fuel tanks.

The battery pack 1 also comprises an exit duct 7 provided with an exit valve 8, through which oxygen is removed from the battery pack 1.

Even though it is only optional, the system can also comprise a cooling unit 9 placed between the inerting system 4 and the battery pack 1 that cools the nitrogen before being injected into the battery pack 1.

It must be pointed out that the injection of air with nitrogen is preferably done injecting air rich in nitrogen and the removal of oxygen is preferably done removing air rich in oxygen.

Therefore, for reducing a thermal runaway inside the battery pack 1, the amount of oxygen in the battery pack 1 is reduced before a thermal runaway occurs. To do this, the system should follow the next steps:
Firstly, a possible thermal runaway is detected using the temperature sensor 3, and possibly also the voltage sensor 4, placed inside the battery pack.

The system can predict a thermal runaway a few minutes before the battery pack 1 catches fire. For example, in the automotive sector, a thermal runaway should be detected at least 5 minutes before the battery pack 1 catches fire.

Through the use of the ducts 5, 7 and valves 6, 8, nitrogen rich air is injected into the battery pack 1.The nitrogen rich air will come from the inerting system 4, which should be capable of delivering nitrogen rich air to the battery pack 1 under emergency conditions.

The entry and exit valves 6, 8 should open, the first to allow the nitrogen rich air into the battery pack 1 and the second to allow the oxygen rich air out of the battery pack 1.

If the cooling unit 9 is present, it will be possible to cool the nitrogen rich air to reduce the temperature, for example, from between 40°C - 80°C to a maximum temperature of 40°C.

By reducing the amount of oxygen inside the battery, the amount of energy released by the system will be reduced, allowing a weight reduction of the battery pack 1 to contain the thermal runaway.

## Claims

1. Method for reducing thermal runaways in a battery pack (1), **characterized in that** the method comprises the following steps:
- detecting a temperature inside the battery pack (1);
- if the temperature detected is higher than a predetermined temperature, injecting air with nitrogen and oxygen, the oxygen being less than the 10 % in volume, the inside the battery pack (1) and removing oxygen from the inside of the battery pack (1).

2. Method for reducing thermal runaways in a battery pack (1) according to claim 1, wherein the injection of air with nitrogen and the removal of oxygen is carried out until the temperature inside the battery pack (1) is reduced with respect to the detected temperature.

3. Method for reducing thermal runaways in a battery pack (1) according to claim 1 or 2, wherein a voltage inside the battery pack (1) is also detected and the injection of nitrogen and the removal of the oxygen is also carried out if the detected voltage is higher than a predetermined voltage.

4. Method for reducing thermal runaways in a battery pack according to anyone of the previous claims, wherein the method also comprises the step of cooling the nitrogen before its injection inside the battery pack (1).

5. System for reducing thermal runaways in a battery pack (1), **characterized in that** the system comprises:
- a temperature sensor (2) placed inside the battery pack (1);
- an inerting system (4) in communication with the battery pack (1) through an entry duct (5) provided with an entry valve (6), for injecting air with nitrogen and oxygen, the oxygen being less than the 10 % in volume, inside the battery pack (1) if a temperature detected by the temperature sensor (2) is higher than a predetermined temperature; and
- an exit duct (7) in the battery pack (1) provided with an exit valve (8), through which oxygen is removed from the battery pack (1) if the temperature detected by the temperature sensor (2) is higher than a predetermined temperature.

6. System for reducing thermal runaways in a battery pack (1) according to claim 5, wherein the system also comprises a voltage sensor (3) placed inside the battery pack (1).

7. System for reducing thermal runaways in a battery pack (1) according to claim 5 or 6, wherein the system also comprises a cooling unit (9) placed between the inerting system (4) and the battery pack (1), for cooling the nitrogen before its injection inside the battery pack (1).
